**Europäisches Patentamt**

**European Patent Office**

**Office européen des brevets**

(19)

(11) Veröffentlichungsnummer: **0 133 666**
**B1**

(12) EUROPÄISCHE PATENTSCHRIFT

(45) Veröffentlichungstag der Patentschrift:
01.06.88

(51) Int. Cl.⁴: **B 27 B 5/18,** B 27 G 5/02

(21) Anmeldenummer: 84108778.6

(22) Anmeldetag: 25.07.84

(54) Sägeeinrichtung.

(30) Priorität: 16.08.83 DE 3329496

(43) Veröffentlichungstag der Anmeldung:
06.03.85 Patentblatt 85/10

(45) Bekanntmachung des Hinweises auf die Patenterteilung:
01.06.88 Patentblatt 88/22

(84) Benannte Vertragsstaaten:
AT BE CH DE FR GB IT LI LU NL SE

(56) Entgegenhaltungen:
DE - A - 2 929 932
DE - C - 1 628 992
US - A - 4 152 961

(73) Patentinhaber: Black & Decker Overseas AG,
Staedtle 36, FL-9490 Vaduz (LI)

(72) Erfinder: Bergler, Otto, Jahnstrasse 18/1,
D-7130 Mühlacker-Lomersheim (DE)

(74) Vertreter: Wilhelm, Hans-Herbert, Dr.-Ing. et al, Wilhelm
& Dauster Patentanwälte Hospitalstrasse 8,
D-7000 Stuttgart 1 (DE)

## Beschreibung

Die Erfindung betrifft eine Sägeeinrichtung nach dem Oberbegriff des Patentanspruches 1.

Sägeeinrichtungen dieser Art sind bekannt (US-A 41 52 961). Bei solchen Sägeeinrichtungen, die als sogenannte Zugsägen ausgebildet sind, wird das Sägeaggregat oberhalb des Sägeblattes an zwei parallel nebeneinanderliegenden Stangen geführt, die durch entsprechende Hülsen im oberen Bereich des Sägegehäuses durchgreifen. Diese Stangen sind in einer Halterung vorgesehen, die ihrerseits um eine parallel zur Sägeblattebene verlaufende Achse an einem schwenkbaren Rundtisch schwenkbar gelagert ist und in einer Kulissenführung arretiert werden kann. Nachteilig ist bei einer solchen Zugsäge, dass das Sägeblatt bei der Bearbeitung stets seitlich in das Werkstück hereingezogen werden muss und dass die Eintauchstelle des Sägeblattes in das Werkstück wegen der relativ breiten Ausführung der Halterung mit den Führungsstangen von der Bedienungsperson nur sehr schwer beobachtet werden kann.

Dies gilt zwar nicht in gleichem Mass für andere bekannte Sägeeinrichtungen (DE-A 29 29 932). Dort ist das Sägeaggregat fest an einem Ende einer aus einem Flachprofil gebildeten Führungsstange befestigt, die längsverschiebbar in einem buchsenförmigen Teil gelagert ist, das auf einem drehbaren Rundtisch sitzt. Das Sägeaggregat lässt sich durch das Verschieben der Führungsstange in dem buchsenförmigen Teil zur Erzielung der Schritte verschieben. Nachteilig ist bei solchen Bauarten aber, dass zwischen dem Sägeblatt und der Längsführung ein grosser Abstand vorliegt, so dass das Spiel in der Längsführung zu Ungenauigkeiten beim Schnitt führt. Auch bei dieser Bauart ist ein Eintauchen des Sägeblattes von oben in das Werkstück, wie dies bei Gehrungssägen üblich ist, nicht möglich.

Kapp- und Gehrungssägen sind in vielen Ausführungen bekannt. Die DE-C 16 28 992 zeigt eine Bauart, bei der das schwenkbare Sägeaggregat, das dort aufgrund der Möglichkeit einer 180°-Wendung des Arbeitstisches auch als Tischsäge eingesetzt werden kann, an einem von Hand betätigbaren Schwenkarm angebracht ist, dessen Lagerung fest an einem in der wendbaren Arbeitsplatte schwenkbar gelagerten Rundtisch befestigt ist. Kapp- und Gehrungssägen dieser Art weisen den Vorteil auf, dass sie sehr leicht und handlich zu bedienen sind, und dass das Sägeblatt für die Bedienungsperson gut sichtbar von oben in das Werkstück eingeführt wird. Nachteilig ist aber, dass der Schnittbereich ausschliesslich von der Grösse des Sägeblattes und von dessen Eintauchtiefe abhängig ist, so dass beispielsweise Bretter, die eine gewisse Breite überschreiten, nicht mehr bearbeitet werden können.

Zur Bearbeitung breiter Werkstücke sind schliesslich auch schon Tischgehrungssägen vorgeschlagen worden, bei denen die Schwenklagerung für den Schwenkarm auf einer parallel zum Eintauchschlitz für das Sägeblatt verlaufenden und aus parallel nebeneinanderliegenden Rundstangen bestehenden Längsführung angeordnet ist, die fest mit dem Auflagetisch für die Werkstücke verbunden ist. Solche Sägeeinrichtungen können zwar auch als Kappsägen verwendet werden. Für Gehrungsschnitte aber ist es notwendig, die Lage des Werkstückes auf dem Auflagetisch zu verändern. Nachteilig ist auch, dass zwischen dem Sägeblatt und der Längsführung für die Schwenklagerung des Schwenkarmes ein sehr grosser Abstand vorliegt. Das unvermeidbare Spiel an der Längsführung führt daher auch dort zu Ungenauigkeiten beim Schnitt am Werkstück. Dies ist bei Sägeeinrichtungen der eingangs genannten Art nicht der Fall.

Der Erfindung liegt daher die Aufgabe zugrunde, eine Sägeeinrichtung der eingangs genannten Art so auszubilden, dass unter Beibehaltung der Schnittgenauigkeit eine einfachere Bedienbarkeit bei kompakter Bauweise und geringem Gewicht möglich ist.

Diese Aufgabe wird bei einer Sägeeinrichtung der eingangs genannten Art durch die kennzeichnenden Merkmale des Patentanspruches 1 gelöst.

Durch diese Ausgestaltung ist der Einsatz einer Zusäge auch als Kapp- und Gehrungssäge möglich, wobei dieser Einsatz aber nicht auf 90°-Schnitte beschränkt ist, sondern bei allen Gehrungsschnittwinkeln anwendbar ist. Das Werkstück muss nicht in seiner Lage auf der Werkstückauflage verändert werden. Da die Längsführung des Sägeaggregates – vom Sägeblatt aus gesehen – vor der Schwenklagerung und damit ganz nahe am Sägeblatt liegt, kann mit der neuen Ausgestaltung auch eine ausgezeichnete Schnittgenauigkeit erreicht werden. Die neue Sägeeinrichtung ist aber ebenso bei der Bearbeitung von kleinen Werkstücken unter den gleichen kinematischen Bedingungen einsetzbar, wie bekannte Kapp- und Gehrungssägen. Sie bleibt leicht und handlich, weil die Gewichtsverteilung in bezug zum Drehpunkt optimal gehalten werden kann. Auch die Handhabung ist äusserst einfach, weil zunächst der bekannte Schwenkvorgang zum Eintauchen des Sägeblattes ausgeführt wird und erst dann bei Bedarf der Zugschnitt ausgeführt wird.

In besonders einfacher Weise wird die Längsführung für das Sägeaggregat unmittelbar im Sägegehäuse integriert, und zwar so, dass die Stangen unmittelbar ober- und unterhalb vom Kollektor und Kohlehalter des Motors liegen und beidseitig an der Lagerwelle des Sägeblattes vorbeiführen. Diese Längsführung liegt damit in unmittelbarer Nähe des Sägeblattes. Die Schnittgenauigkeit kann sehr gross gehalten werden. Durch die Untereinanderanordnung der beiden Führungsstangen wird der Raumbedarf parallel zum Sägeblatt gering gehalten, so dass auch dadurch die leichte Bedienbarkeit nicht beeinflusst wird.

Eine bauliche Vereinfachung ergibt sich, wenn die Motorlagerung, die Sägelagerung und die Bohrungen für die Längsführung in einem einheitlichen Gehäuse angeordnet sind, wobei die Führungsbohrungen für die Stangen im Gehäuse jeweils so lang ausgeführt werden, dass die Stangen, die vorteilhaft als Rundstangen ausgebildet werden, nie aus der Führungsbohrung nach vorne heraustreten können. Diese Bauart ermöglicht es, auf der Bedienungsseite der neuen Säge ein geschlossenes Gehäuse vorzusehen.

Vorteilhaft ist es auch, an der den Schwenkarm bildenden Längsführung eine Rückstellfeder vorzusehen, welche die Längsführung stets in der oberen Lage hält, wenn sie nicht von der Bedienungsperson nach unten gedrückt wird. Durch diese Ausgestaltung ergibt sich bei der hier vorliegenden Bauart dann der Vorteil, dass das Sägeaggregat stets durch die Schwerkraft in dem Bereich der Schwenklagerung zurückgestellt wird, so dass für einen neuen Arbeitsvorgang stets, wie vorher erwähnt, die gleichen Ausgangsbedingungen vorliegen, wie bei üblichen Kapp- und Gehrungssägen, wo nur kurze Schwenkwege bis zum Werkstück zurückgelegt werden müssen.

Ein Ausführungsbeispiel der Erfindung ist in den beigefügten Zeichnungen dargestellt und wird im folgenden erläutert. Es zeigen:

Fig. 1 eine perspektivische Ansicht der neuen Kapp-, Gehrungs- und Zugsäge,

Fig. 2 die Draufsicht auf den Werkstückauflagetisch der Fig. 1 ohne Rundtisch und Sägeaggregat,

Fig. 3 den Schnitt durch den Werkstückauflagetisch der Fig. 2 längs der Linie III-III,

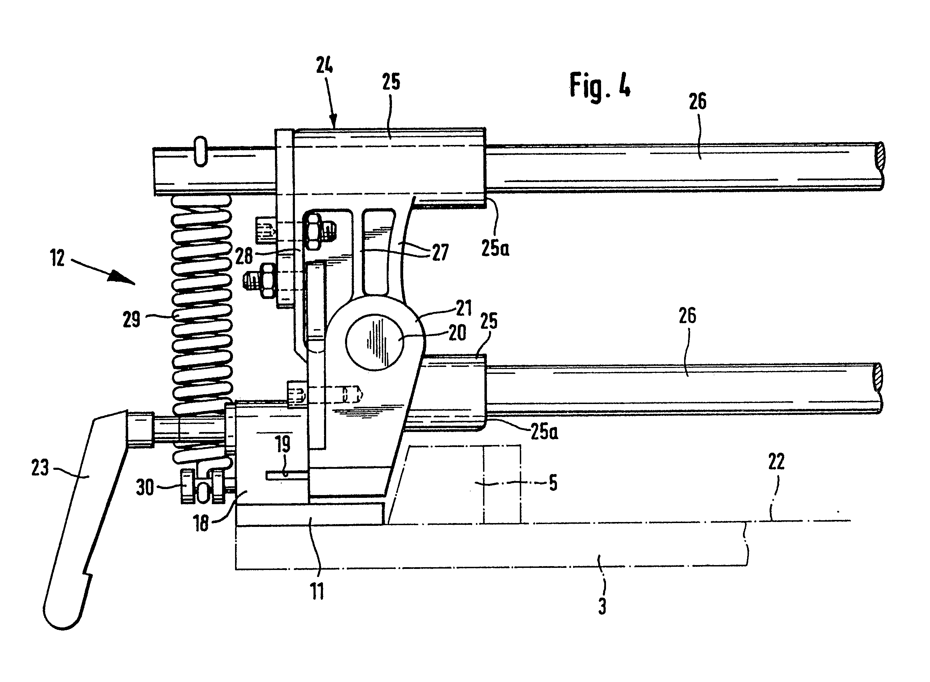

Fig. 4 eine Seitenansicht der Schwenklagerung für das Sägeaggregat in vergrössertem Massstab und

Fig. 5 eine teilweise aufgeschnittene Ansicht des Gehäuses für das Sägeaggregat ohne Schutzhaube und Sägeblatt.

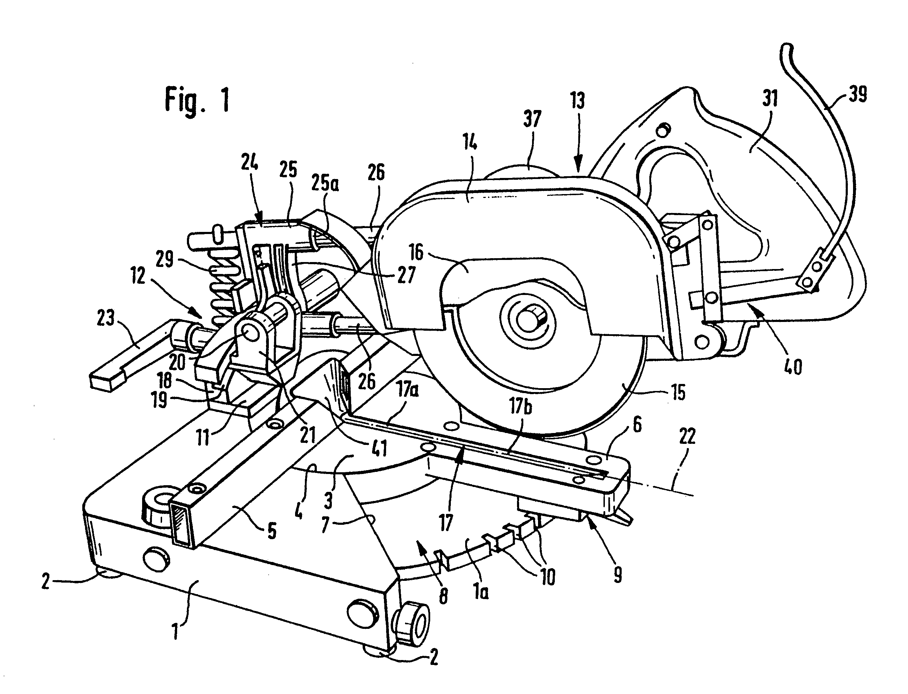

In der Fig. 1 ist in einem Werkstückauflagetisch 1, der mit einstellbaren Standfüssen 2 versehen ist, ein Rundtisch 3 verschwenkbar gelagert, der in dem Werkstückauflagetisch 1 in einer seinen Aussenabmessungen entsprechenden Aussparung 4 zwischen einem Boden 1a des Werkstückauflagetisches und einer quer über den Rundtisch verlaufenden Anschlagleiste 5 gehalten ist. Fest mit dem Rundtisch 3 verbunden ist eine Lagerplatte 11, auf der eine Schwenklagerung 12 für ein Sägeaggregat 13 befestigt ist, dass in noch näher zu beschreibender Weise zur Ausführung von Kapp-, Gehrungs- und Zugschnitten geeignet ist. Zu diesem taucht das in der Fig. 1 hinter einer oberen Schutzhaube 14 und einer unteren, wegschwenkbaren Schutzhaube 15 gelagertes Sägeblatt 16 in einen Eintauchschlitz 17 ein.

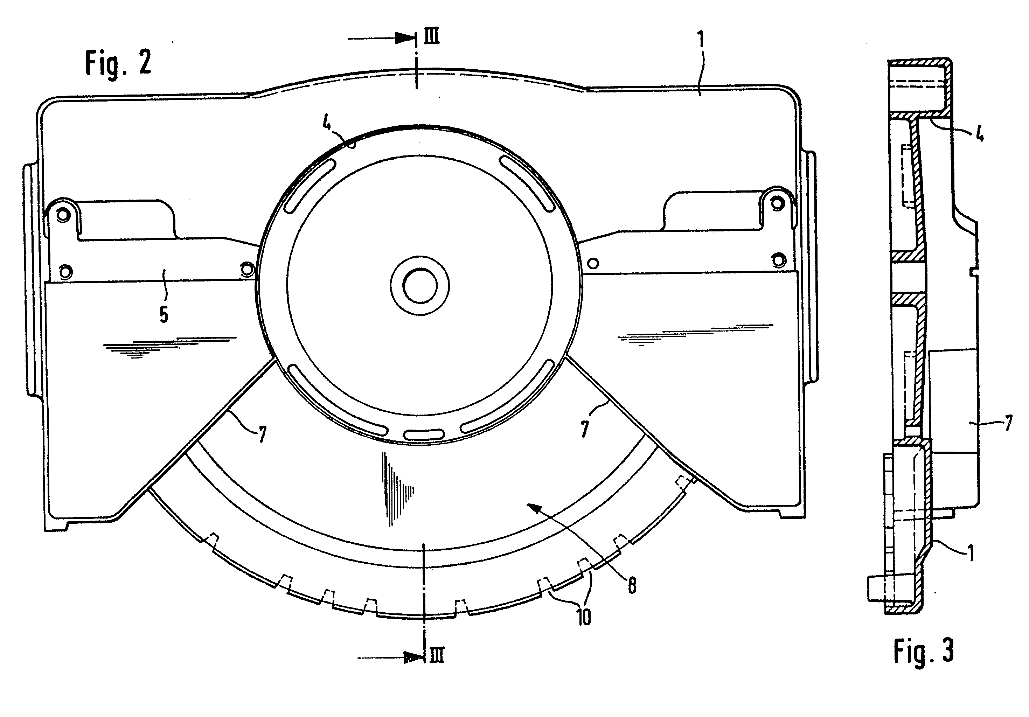

Wie aus den Fig. 1 und 2 hervorgeht, besteht die Schwenklagerung 12 aus einem fest mit der Befestigungsplatte 11 verbundenen Lagerklotz 18 mit einer kreisbogenförmigen Kulissenführung 19, welcher ein mit einer Schwenkachse 20 versehener Lagerblock 21 um eine Achse 22 verschwenkt werden kann, die parallel zum Sägeblatt 16 in Richtung des Eintauchschlitzes 17 auf der Oberfläche des Rundtisches 3 verläuft. Die jeweilige Lage des Lagerblockes 21 ist beispielsweise über eine Skala einstellbar. Sie wird durch das Anziehen eines Klemmhebels 23 fixiert, der den Lagerblock 21 gegen den Lagerklotz 18 drückt. An der Schwenkachse 20 verschwenkbar gelagert ist ein Lagerloch 24, das aus zwei hülsenförmigen und parallel zueinander ausgerichteten Lagerkörpern 25 für je eine Rundstange 26 besteht, die untereinander durch Querverstrebungen 27 und 28 verbunden sind. Die obere der beiden Rundstangen 26 ist durch den Lagerkörper 25 nach hinten durchgeführt. An ihr ist eine Zugfeder 29 eingehängt, deren anderes Ende fest mit dem Lagerklotz 18 über einen Haltebolzen 30 verbunden ist. Diese Feder 29 sorgt dafür, dass die Rundstangen 26 und das Joch 24 stets in die in der Fig. 1 angedeutete Lage gebracht werden, in der die Führungsstangen 26 ihre obere Endlage einnehmen. Das frei auf ihnen verschiebbare Sägeaggregat 13 wird dann durch die Schwerkraft in der gegenüber der Fig. 1 linken Endlage gehalten, in der das noch zu beschreibende Sägegehäuse an den Stirnseiten 25a der hülsenförmigen Lagerkörper 25 anliegt. In der in der Fig. 1 gezeigten Lage ist das Sägeaggregat 13 in der rechten Endlage gezeigt, in der es nur durch Handbetätigung gehalten werden kann, die über den Handgriff 31 erfolgt.

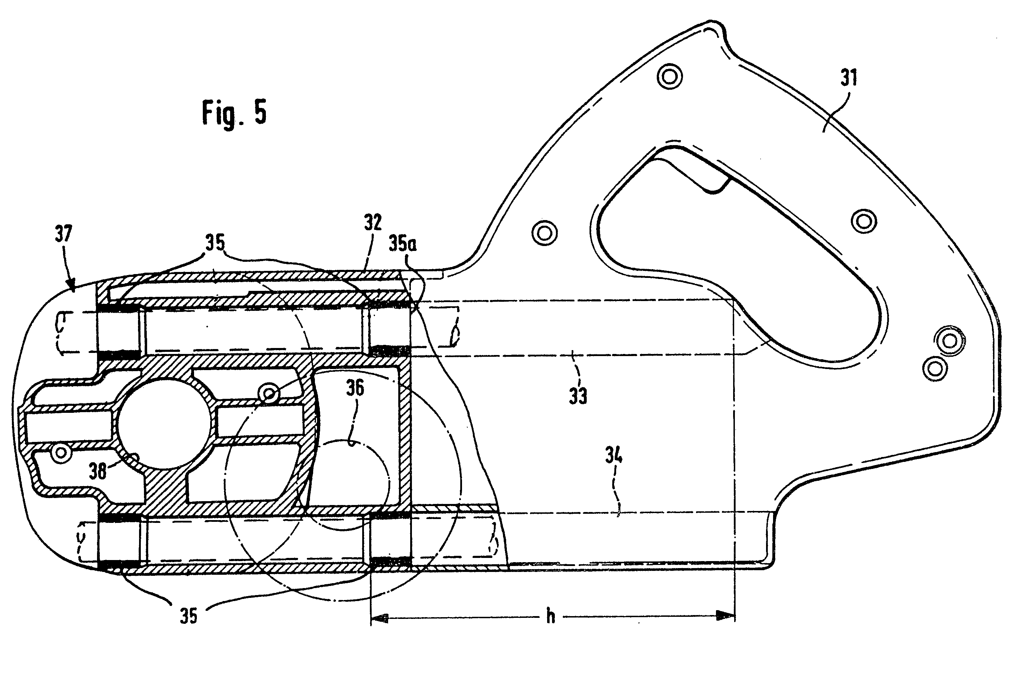

Aus Fig. 5 ist erkennbar, dass das mit dem Handgriff 31 versehene Sägegehäuse 32 zylindrische Längsführungen 33 und 34 aufweist, deren Innendurchmesser auf die Grösse der Rundstangen 26 abgestellt ist. Ein Teil der Längsführungen 33 und 34 ist dabei mit reibungsarmen Führungsbüchsen 35 versehen, die an den Rundstangen 26 anliegen und eine exakte Führung gewährleisten. Wie Fig. 5 entnommen werden kann, sind die Längsführungen 33 und 34 dabei so lang ausgebildet, dass die Rundstangen 26 über den gesamten Zugbereich innerhalb der Längsführungen 33 und 34 bleiben. In nicht näher dargestellter Weise können die Zugstangen 26 an ihrem freien Ende jeweils mit Anschlägen versehen sein, die an den Stirnseiten 35a der Führungsbüchsen 35 anschlagen und ein Herausziehen der Führungsstangen 26 aus den Längsführungen 33 und 34 vermeiden.

Die Führungsbüchsen 35 sind beidseitig von der in dem Gehäuse 32 angeordneten Lagerbohrung 36 für das Sägeblatt 16 angeordnet. Sie sind unmittelbar ober- und unterhalb von der Stelle des Gehäuses 32 geführt, die nach der Montage vom Kollektor und Kohlehalter des Antriebsmotors eingenommen wird, der innerhalb des seitlich vom Gehäuse 32 abragenden Gehäuseteils 37 und mit seiner Welle in der Bohrung 38 gelagert wird. Durch diese Anordnung der Längsführungen 33 und 34, die auch unmittelbar neben dem Sägeblatt 16 verlaufen, wird eine sehr exakte Führung des Sägegehäuses 32 erreicht. Schnittungenauigkeiten können dadurch nahezu ausgeschlossen werden.

Bei der Benutzung des neuen Kapp-, Gehrungs- und Zugsägenaggregates wird zunächst an der Anschlagleiste 5 das zu bearbeitende Werkstück angelegt. Anschliessend wird die Schwenklagerung 12 entweder so eingestellt, dass das Sägeblatt 16 senkrecht zur Oberfläche des Werkstückauflagetisches 1 oder in einem Winkel hierzu steht. Es kann dann der Gehrungswinkel durch Einstellen der Lage des Rundtisches 3 eingestellt werden, und anschliessend kann die Bearbeitung durch Herunterdrücken des Sägeaggregates 13 mit den Rundstangen 26 am Handgriff 31 begonnen werden. Dabei wird beim Eingreifen des Handgriffes 31 von der Bedienungsperson zwangsläufig der vor dem Handgriff 31 stehende Handhebel 39 erfasst und gegen den Handhebel 31 gedrückt, so dass über die Hebelanordnung 40 die untere Schutzhaube 15 vom Sägeblatt 16 abgeschwenkt wird. Die obere Schutzhaube 14 ist fest mit dem Sägegehäuse 32 verbunden. Sie kann auch Teil dieses Gehäuses sein. Nach dem Eintauchen des Sägeblattes 16 kann dann bei Bedarf das gesamte Sägeaggregat 13 mit Hilfe des Handgriffes längs der Rundstangen 26 in Richtung der Achse 22 verschoben werden, so dass ein Zugschnitt möglich ist. Nach der Bearbeitung wird der Handgriff 31 losgelassen. Die Schutzhaube 15 schwenkt sich wieder vor das Sägeblatt 16 und die Feder 29 hebt die aus den Rundstangen 26 bestehende Führung für das Sägeaggregat 13 nach oben, in die in der Fig. 1 gezeigten Lage. Durch das Eigengewicht rutscht dann das Sägeaggregat 13 in die linke Lage bis zum Anschlag an den Stirnflächen 25a der hülsenförmigen Lagerkörper 25. Ein neuer Bearbeitungsvorgang kann einsetzen. Um jeweils zu gewährleisten, dass das Sägeblatt in das Werkstück eintauchen kann, ist die Anschlagleiste 5 in ihrer Mitte durch eine Ausnehmung 41 unterbrochen, die sich entsprechend dem Schwenkbereich des Rundtisches 3 und entsprechend der möglichen Schwenkung des Sägeaggregates um die Achse 22 jeweils von der Anschlagkante der Anschlagleiste 5 aus gesehen nach hinten und oben erweitert.

## Patentansprüche

1. Sägeeinrichtung, bestehend aus einem Sägeaggregat mit einem Sägegehäuse und einem motorgetriebenen Sägeblatt (16), das an einer parallel zur Ebene des Sägeblattes verlaufenden Längsführung gehalten ist, die im Bereich des Randes eines verdrehbaren Rundtisches (3) mit einem bis zum Umfang durchgehenden Eintauchschlitz (17) für das Sägeblatt angeordnet ist, wobei der Rundtisch in einer Werkstückauflage eingelassen ist, die auf der Seite des Rundtisches, auf der dessen Eintauchschlitz bis zur Peripherie reicht, eine dem Gehrungsschnittbereich entsprechende Ausnehmung (8) für das Sägeblatt aufweist und bei der die Längsführung aus parallel zueinander verlaufenden Stangen (26), die mit einem schwenkbaren Lagerbock (21) einer Schwenklagerung (12) am Rundtisch verbunden sind, und aus am Sägegehäuse angeordneten Bohrungen (33, 34) besteht, in denen die Stangen verschiebbar geführt sind, dadurch gekennzeichnet, dass die Stangen (26) in einer zum Sägeblatt (16) parallelen Ebene im Abstand untereinander angeordnet und mit jeweils einem ihrer Enden fest an einem Lagerjoch (24) gehalten sind, das an dem schwenkbaren Lagerbock (21) um eine parallel zur Sägewelle verlaufende Schwenkachse (20) gelagert und zur Gwichtsentlastung über eine Rückstellfeder (29) mit 'dem Rundtisch (3) verbunden ist.

2. Sägeeinrichtung nach Anspruch 1, dadurch gekennzeichnet, dass die Stangen (26) unmittelbar ober- und unterhalb der Lagerbohrung (26) für das Sägeblatt und der Lagerbohrung (38) für den Antriebsmotor verlaufen.

3. Sägeeinrichtung nach den Ansprüchen 1 und 2, dadurch gekennzeichnet, dass die Stangen (26) unmittelbar ober- und unterhalb vom Kollektor und Kohlehalter des Motors verlaufen.

4. Sägeeinrichtung nach einem der Ansprüche 1 bis 3, dadurch gekennzeichnet, dass die Bohrungen (33 und 34) für die Stangen (26) in dem Gehäuse (32) zur Lagerung des Motors und des Sägeblattes (16) integriert sind.

5. Sägeeinrichtung nach Anspruch 4, dadurch gekennzeichnet, dass die Bohrungen (33 und 34) im Sägegehäuse so lang ausgelegt sind, dass die Stangen (26) über den gesamten Zugbereich (h) stets innerhalb des Gehäuses (32) geführt sind.

6. Sägeeinrichtung nach einem der Ansprüche 1 bis 5, dadurch gekennzeichnet, dass die Rückstellfeder (29) so angeordnet ist, dass die Schwenklagerung mit den Stangen stets in der vom Rundtisch abgehobenen oberen Endlage steht und bei der Bearbeitung gegen die Kraft dieser Rückstellfeder verschwenkbar ist.

## Claims

1. Sawing device, consisting of a sawing unit with a saw housing and a motor driven saw blade (16), which is held on a longitudinal guide running parallel to the plane of the saw blade, which is arranged in the area of the edge of a rotatable round table (3) with an immersion slot (17) for the saw blade which is continuous to the periphery, whereby the round table is let into a workpiece holder, which is provided on the side of the round table, on which its immersion slot extends to the periphery, with a recess (8) for the saw blade corresponding to the mitering area and for which the longitudinal guide consists of rods (26) running parallel with each other, which are connected to a swivelling supporting bracket (21) of a swivel mounting (12) at the round table and of holes (33, 34) arranged³ at the saw housing, in which the rods can be run so that they are displaceable, characterised in that the rods (26) are arranged at a distance from each other in a plane which is parallel to the saw blade (16) and which in each case are held by one of their ends rigidly to a bearing yoke (24) which is mounted at the swivelling bearing block (21) about a swivel axis (20) running parallel with the saw shaft and connected to the round table (3) via a return spring (29) for relieving the weight.

2. Sawing device according to claim 1, characterised in that the rods (26) run directly above and below the bearing hole (36) for the saw blade and the bearing hole (38) fot the drive motor.

3. Sawing device according to claims 1 and 2, characterised in that the rods (26) run immediately above and below the collector and carbon holder of the motor.

4. Sawing device according to one of claims 1 to 3, characterised in that the holes (33 and 34) for the rods (26) are incorporated in the housing (32) for mounting the motor and saw blade (16).

5. Sawing device according to claim 4 characterised in that the holes (33 and 34) are arranged with such a length in the saw housing, that the rods (26) are always run inside the housing (32) over the complete draw range (h).

6. Sawing device according to one of claims 1 to 5, characterised in that the return spring (29) is arranged in such a way that the swivel mounting with the rods is always located in the upper end position as raised from the round table and can be swivelled against the force of this return spring during processing.

**Revendications**

1. Dispositif de sciage se composant d'un appareil de sciage composé d'un carter de scie et d'une lame de scie entraînée par un moteur (16) qui est maintenu sur un guide longitudinal s'étendant parallèlement au plan de la lame de scie, ce guide étant placé dans la zone de bordure d'un plateau circulaire tournant (3) avec une fente de pénétration (17) s'étendant jusqu'à la périphérie pour la lame de scie, le plateau circulaire étant introduit dans un porte-pièce qui pénètre par la fente jusqu'à la périphérie, comportant une cavité (8) correspondant à la zone coupe en biais, pour la lame de scie et grâce à quoi le guide longitudinal est constitué par les tiges 26 parallèles entre elles qui sont reliées à un palier support (21) d'un support oscillant (12) au plateau tournant et par les alésages (33, 34) disposés sur le carter de scie dans lesquels les tiges peuvent se déplacer en étant guidées, caractérisé en ce que les tiges (26) sont placées dans un plan parallèle à la lame de scie écartées l'une de l'autre et que chacune de leurs extrémités est maintenue fixement sur une traverse de palier 24 qui est disposée sur le palier support pivotant (21) autour de l'axe de pivotement (20) s'étendant parallèlement à l'arbre de la scie et est relié à la table tournante (3) par un ressort de rappel (29) pour soulager la masse.

2. Dispositif de sciage selon la revendication 1, caractérisé en ce que les tiges (26) s'étendent immédiatement au-dessus et au-dessous des alésages de palier (36) pour la lame de scie et de l'alésage de palier (38) pour le moteur d'entraînement.

3. Dispositif de sciage selon les revendications 1 et 2, caractérisé en ce que les tiges (26) s'étendent immédiatement au-dessus et au-dessous du collecteur et du porte-collecteur du moteur.

4. Dispositif de sciage selon l'une des revendications 1 à 3, caractérisé en ce que les alésages (33) et (34) pour les tiges (26) dans le carter (32) pour le support du moteur et de la lame de scie, sont intégrés.

5. Dispositif de sciage selon la revendication 4, caractérisé en ce que les alésages (33) et (34) dans le carter de scie sont prévus d'une longueur telle que les tiges (26) soient guidées sur toute la zone de traction (h) de façon constante à l'intérieur du carter (32).

6. Dispositif de sciage selon l'une des revendications 1 à 5, caractérisé en ce qu'un ressort de rappel est placé de façon à ce que le palier pivotant soit placé de façon fixe en position d'extrémité supérieure enlevée de la table tournante, et puisse pivoter lors de l'utilisation à l'encontre de la force de ce ressort de rappel.

Fig. 1

Fig. 2

Fig. 3

1

III

4

5

6

7

7

8

10

III

0 133 666

1

4

7

Fig. 4

0 133 666

Fig. 5